# EUROPEAN PATENT APPLICATION

(11) **EP 4 700 962 A1**
(43) Date of publication of application: **25.02.2026**
(21) Application number: 23935022.6
(22) Date of filing: 16.11.2023
(51) Int. Cl.: H01M 50/449, H01M 10/0525, H01M 50/414

(54) **BATTERY CELL, BATTERY AND ELECTRIC DEVICE**

(30) Priority: 23.04.2023 CN 202310443356
(71) Applicant: Contemporary Amperex Technology Co., Limited, Ningde, Fujian 352100 (CN)
(72) Inventor: XU, Xiaofu, Ningde, Fujian 352100 (CN)
(74) Representative: Ziebig Hengelhaupt Intellectual Property Attorneys Patentanwaltskanzlei PartGmbB
(86) International application number: PCT/CN2023/132103
(87) International publication number: WO 2024/221854

(57) **Abstract**

Embodiments of the present application provide a battery cell, a battery, and an electric apparatus. The battery cell includes an electrode assembly, the electrode assembly including a negative electrode plate, a positive electrode plate, and a separator, the separator being configured to isolate the negative electrode plate and the positive electrode plate; where a ratio of a thickness of the separator to a thickness of the negative electrode plate is greater than or equal to 0.07. The battery cell provided in the embodiments of the present application can improve the electrolyte retention capacity of the battery by controlling the thicknesses of the separator and the negative electrode plate, mitigating the decomposition or volatilization of the electrolyte in the battery cell, thereby prolonging the cycle life of the battery.

## Description

### CROSS-REFERENCE TO RELATED APPLICATIONS

The present application claims priority to Chinese Patent Application No. 202310443356.1, filed on April 23, 2023 and entitled "BATTERY CELL, BATTERY, AND ELECTRIC APPARATUS," which is incorporated herein by reference in its entirety.

### TECHNICAL FIELD

Embodiments of the present application relate to the field of battery technology, and more particularly, to a battery cell, a battery, and an electric apparatus.

### BACKGROUND

With the continuous advancement of battery technology, various new energy industries utilizing batteries as energy storage devices have experienced rapid development. Currently, the typically thin design of the negative electrode plate in a metal battery cell results in relatively poor electrolyte retention ability. During the charge-discharge cycles of the battery cell, the electrolyte is continuously consumed, and localized depletion of the electrolyte may occur, leading to performance degradation of the battery cell and affecting the cycle life of the battery cell.

### SUMMARY

Embodiments of the present application provide a battery cell, a battery, and an electric apparatus capable of prolonging the cycle life of the battery cell.

According to a first aspect, a battery cell is provided, including an electrode assembly, the electrode assembly including a negative electrode plate, a positive electrode plate, and a separator, and the separator being configured to isolate the negative electrode plate and the positive electrode plate; where a ratio of a thickness *H*₁ of the separator to a thickness *H*₂ of the negative electrode plate is greater than or equal to 0.07.

In embodiments of the present application, when the ratio of the thickness *H*₁ of the separator to the thickness *H*₂ of the negative electrode plate is set to be greater than or equal to 0.07, increasing the thickness *H*₁ of the separator enables retention of more electrolyte, and mitigating the issue of performance degradation of the battery cell caused by insufficient electrolyte or electrolyte depletion in the battery cell, thereby prolonging the cycle life of the battery cell.

In some implementations, the thickness *H*₁ of the separator and the thickness *H*₂ of the negative electrode plate satisfy: 0.07 ≤ *H*₁/*H*₂ ≤ 241.18, and preferably, the thickness *H*₁ of the separator and the thickness *H*₂ of the negative electrode plate satisfy: 0.15 ≤ *H*₁/*H*₂ ≤ 220.59.

In embodiments of the present application, when *H*₁/*H*₂ < 0.07, the thickness *H*₁ of the separator is set relatively small, resulting in relatively poor electrolyte retention capacity of the separator, which may lead to excessively insufficient electrolyte or electrolyte depletion in the battery cell, causing performance degradation of the battery cell and affecting the cycle life of the battery cell. When *H*₁/*H*₂ > 241.18, the thickness *H*₁ of the separator is set relatively large, increasing the ion transport path within the battery cell, thereby increasing the liquid-phase impedance of the battery cell, affecting the specific capacity performance of the battery cell, and reducing the energy density of the battery cell. Additionally, due to spatial constraints within the battery cell, the thickness *H*₁ of the separator has an upper limit. Therefore, by setting the ratio of the thickness *H*₁ of the separator to the thickness *H*₂ of the negative electrode plate in the battery cell to: 0.07 ≤ *H*₁/*H*₂ ≤ 241.18, or by setting the ratio of the thickness *H*₁ of the separator to the thickness *H*₂ of the negative electrode plate in the battery cell to: 0.15 ≤ *H*₁/*H*₂ ≤ 220.59, the issue of performance degradation of the battery due to insufficient electrolyte or electrolyte depletion in the battery cell can be effectively mitigated while balancing the internal space and electrolyte retention capacity of the battery cell, thereby prolonging the cycle life of the battery cell and improving the specific capacity performance of the battery cell.

In some implementations, the thickness *H*₁ of the separator and the thickness *H*₂ of the negative electrode plate satisfy: 1.16 ≤ *H*₁/*H*₂ ≤ 75, and preferably, the thickness *H*₁ of the separator and the thickness *H*₂ of the negative electrode plate satisfy: 1.16 ≤ *H*₁/*H*₂ ≤ 21.43.

In embodiments of the present application, by setting the ratio of the thickness *H*₁ of the separator to the thickness *H*₂ of the negative electrode plate in the battery cell to: 1.16 ≤ *H*₁/*H*₂ ≤ 75, or by setting the ratio of the thickness *H*₁ of the separator to the thickness *H*₂ of the negative electrode plate in the battery cell to: 1.16 ≤ *H*₁/*H*₂ ≤ 21.43, the internal space of the battery cell and the electrolyte retention capacity of the battery cell can be better balanced, effectively mitigating the issue of performance degradation of the battery cell due to insufficient electrolyte or electrolyte depletion of the battery cell, thereby prolonging the cycle life of the battery cell.

In some implementations, the thickness *H*₁ of the separator and the thickness *H*₂ of the negative electrode plate satisfy: 1.20 ≤ *H*₁/*H*₂ ≤ 10. Thus, by setting the thickness *H*₁ of the separator and the thickness *H*₂ of the negative electrode plate to: 1.20 ≤ *H*₁/*H*₂ ≤ 10, the internal space of the battery cell and the electrolyte retention capacity of the battery cell can be better balanced, effectively mitigating the issue of performance degradation of the battery cell due to insufficient electrolyte or electrolyte depletion in the battery cell, thereby prolonging the cycle life of the battery cell.

In some implementations, the separator includes a separator body and a functional separator coating disposed on a surface of the separator body, the functional separator coating being disposed on one side surface or two side surfaces of the separator body.

In embodiments of the present application, by providing a functional separator coating on one side surface or two side surfaces of the separator body of the separator, the electrolyte retention capacity of the separator can be enhanced through the functional separator coating, enabling timely replenishment of electrolyte in cases of insufficient electrolyte or electrolyte depletion in the battery cell, effectively reducing performance degradation of the battery cell, and prolonging the cycle life of the battery cell.

In some implementations, a material of the functional separator coating includes at least one of the following: polyvinylidene fluoride copolymer, sodium carboxymethyl cellulose, polystyrene-butadiene copolymer, hydrogenated styrene-butadiene block copolymer, hydrogenated styrene-isoprene block copolymer, ethylene-butene copolymer, polypropylene-octene thermoplastic elastomer, ethylene-octene thermoplastic elastomer, and propylene-ethylene copolymer.

In embodiments of the present application, by setting the material of the functional separator coating of the separator in the battery cell to at least one of the following: polyvinylidene fluoride copolymer, sodium carboxymethyl cellulose, polystyrene-butadiene copolymer, hydrogenated styrene-butadiene block copolymer, hydrogenated styrene-isoprene block copolymer, ethylene-butene copolymer, polypropylene-octene thermoplastic elastomer, ethylene-octene thermoplastic elastomer, and propylene-ethylene copolymer, the reversible compression capability of the functional separator coating of the separator can be significantly enhanced, buffering volume swelling of the negative electrode plate during the charge-discharge process of the battery cell, thereby mitigating performance degradation of the battery cell.

In some implementations, the thickness of the separator body is 3 µm to 250 µm.

In embodiments of the present application, when the thickness of the separator body is set to less than 3 µm, the thickness of the separator body is set relatively small, resulting in relatively poor overall electrolyte retention capacity of the separator, and making it difficult to replenish electrolyte in the battery cell in cases of excessively insufficient electrolyte or electrolyte depletion in the battery cell, thus affecting the cycle life of the battery cell. When the thickness of the separator body is set to greater than 250 µm, the thickness of the separator body is set relatively large, increasing the ion transport path within the battery cell, thereby increasing the liquid-phase impedance of the battery cell, affecting the specific capacity performance of the battery cell, and reducing the energy density of the battery cell. Additionally, due to spatial constraints within the battery cell, the thickness of the separator body has an upper limit. By setting the thickness of the separator body to 3 µm to 250 µm, the internal space and electrolyte retention capacity of the battery cell can be balanced, effectively reducing performance degradation of the battery cell and prolonging the cycle life of the battery cell.

In some implementations, the thickness of the separator body is 5 µm to 50 µm. Thus, by better balancing the internal space and electrolyte retention capacity of the battery cell, the issue of performance degradation of the battery cell due to insufficient electrolyte or electrolyte depletion in the battery cell is mitigated, prolonging the cycle life of the battery cell.

In some implementations, the thickness of the functional separator coating is 0.1 µm to 250 µm.

In embodiments of the present application, when the thickness of the functional separator coating is set to less than 0.1 µm, the thickness of the functional separator coating is set relatively small, resulting in relatively poor overall electrolyte retention capacity of the separator, and making it difficult to replenish electrolyte in the battery cell in cases of excessively insufficient electrolyte or electrolyte depletion in the battery cell, thus affecting the cycle life of the battery cell. When the thickness of the functional separator coating is set to greater than 250 µm, the thickness of the functional separator coating is set relatively large, increasing the ion transport path within the battery cell, thereby increasing the liquid-phase impedance of the battery cell, affecting the specific capacity performance of the battery cell, and reducing the energy density of the battery cell. Additionally, due to spatial constraints within the battery cell, the thickness of the functional separator coating has an upper limit. By setting the thickness of the functional separator coating to 0.1 µm to 250 µm, the internal space and electrolyte retention capacity of the battery cell can be balanced, prolonging the cycle life of the battery cell.

In some implementations, the thickness of the functional separator coating is 0.5 µm to 50 µm, and preferably, the thickness of the functional separator coating is 2 µm to 20 µm. Thus, by better balancing the internal space and electrolyte retention capacity of the battery cell, the cycle life of the battery cell is prolonged.

In some implementations, the functional separator coating is a hollow resilient structure.

In embodiments of the present application, by configuring the functional separator coating in the separator as a hollow resilient structure, the hollow structure can store a relatively large amount of electrolyte, enabling timely replenishment of electrolyte in cases of insufficient electrolyte or electrolyte depletion in the battery cell, thus effectively reducing performance degradation of the battery cell and prolonging the cycle life of the battery cell; and the hollow resilient structure of the functional separator coating can buffer volume swelling of the electrode plate during the charge-discharge process of the battery cell, while reducing the risk of electrolyte drying or disconnection due to electrode plate volume swelling.

In some implementations, the hollow resilient structure includes a non-closed pore structure.

In embodiments of the present application, by configuring the functional separator coating as a hollow resilient structure, with the hollow resilient structure including a non-closed pore structure, during the charge-discharge process of the battery cell, when the electrode plate undergoes volume swelling and compresses the hollow resilient structure, the electrolyte within the hollow resilient structure can be discharged through the non-closed pore structure, enabling timely replenishment of electrolyte in the battery cell, reducing the risk of electrolyte drying or disconnection, and prolonging the cycle life of the battery cell.

In some implementations, at least one opening of the pore structure faces the negative electrode plate.

In embodiments of the present application, by orienting at least one opening of the pore structure toward the negative electrode plate, during the charge-discharge process of the battery, when the negative electrode plate undergoes volume swelling and compresses the hollow resilient structure, causing a reduction or depletion of electrolyte between the separator and the negative electrode plate, the electrolyte stored within the hollow resilient structure can be discharged through the at least one opening of the pore structure to replenish the electrolyte between the separator and the negative electrode plate, effectively reducing the risk of electrolyte drying or disconnection between the separator and the negative electrode plate, thereby prolonging the cycle life of the battery cell.

In some implementations, the hollow resilient structure includes multiple non-closed hollow resilient microspheres arranged along the surface of the separator body. Thus, in embodiments of the present application, the hollow resilient structure can store electrolyte through the multiple non-closed hollow resilient microspheres arranged along the surface of the separator body. The multiple non-closed hollow resilient microspheres can store electrolyte, enabling timely replenishment of electrolyte in cases of insufficient electrolyte or electrolyte depletion in the battery cell, effectively reducing performance degradation of the battery, and prolonging the cycle life of the battery cell. In addition, during the charge-discharge process of the battery cell, when the negative electrode plate undergoes volume swelling and compresses the hollow resilient structure, the hollow resilient microspheres can buffer the negative electrode plate, and when the volume swelling of the negative electrode plate compresses the separator, causing a reduction or depletion of electrolyte between the negative electrode plate and the separator, the electrolyte stored within the hollow resilient microspheres can be compressed and discharged by the negative electrode plate, enabling timely replenishment of electrolyte between the separator and the negative electrode plate, thus effectively reducing the risk of electrolyte drying or disconnection between the separator and the negative electrode plate.

In some implementations, the specific surface area of the pore structure is 0.5 m²/g to 10 m²/g.

In embodiments of the present application, the specific surface area of the pore structure being less than 0.5 m²/g indicates a relatively small amount of pore structures of the material, resulting in relatively poor adsorption capacity, and making it difficult to store electrolyte through the pore structure. When the specific surface area of the pore structure is greater than 10 m²/g, the processing difficulty of the pore structure increases, raising manufacturing costs. Thus, by setting the specific surface area of the pore structure to 0.5 m²/g to 10 m²/g, the pore structure can have good electrolyte storage capacity, and during the charge-discharge process of the battery cell, when the electrode plate undergoes volume swelling and compresses the hollow resilient structure, the electrolyte within the hollow resilient structure can be smoothly discharged through the non-closed pore structure, enabling timely replenishment of electrolyte in the battery cell, reducing the risk of electrolyte drying or disconnection, and prolonging the cycle life of the battery cell.

In some implementations, the compression percentage of the separator is 8% to 95%.

In embodiments of the present application, by setting the compression percentage of the separator to 8% to 95%, during the charge-discharge process of the battery cell, the separator can buffer the electrode plate undergoing volume swelling, thereby improving the usage performance of the battery cell.

In some implementations, the compression percentage of the separator is 20% to 80%. Thus, during the charge-discharge process of the battery cell, the separator can well buffer the electrode plate undergoing volume swelling, improving the usage performance of the battery cell.

In some implementations, the compressive strength range of the separator is 0.05 MPa to 10 MPa.

In embodiments of the present application, when the compressive strength range of the separator is less than 0.05 MPa, during the charge-discharge process of the battery cell, the electrode plate previously subjected to volume swelling may compress the separator, easily causing deformation or damage to the separator. When the compressive strength range of the separator is greater than 10 MPa, the compressive strength of the separator is relatively high, making it difficult to buffer the electrode plate previously subjected to volume swelling during the charge-discharge process, affecting the usage performance of the battery cell and reducing the cycle life of the battery cell. By setting the compressive strength range of the separator to 0.05 MPa to 10 MPa, the separator can buffer the electrode plate previously subjected to volume swelling during the charge-discharge process of the battery cell.

In some implementations, the compressive strength range of the separator is 0.05 MPa to 3 MPa. Thus, during the charge-discharge process of the battery cell, the separator can well buffer the electrode plate previously subjected to volume swelling.

In some implementations, the battery cell is an anodeless sodium secondary battery.

In some implementations, the negative electrode plate includes a negative electrode current collector and a negative electrode functional coating disposed on a surface of the negative electrode current collector, the negative electrode functional coating being disposed on one side surface or two side surfaces of the negative electrode current collector.

In embodiments of the present application, by providing a negative electrode functional coating on one side surface or two side surfaces of the negative electrode current collector of the negative electrode plate, the electrolyte retention capacity of the negative electrode plate can be enhanced, enabling timely replenishment of electrolyte in cases of insufficient electrolyte or electrolyte depletion in the battery cell, thus effectively reducing performance degradation of the battery cell and prolonging the cycle life of the battery cell.

In some implementations, the material of the negative electrode functional coating is a porous carbon material; and preferably, the porous carbon material includes at least one of the following: carbon nanotubes, Super-P, KS-6, mesocarbon microbeads, hard carbon, and graphite.

In some implementations, by arranging the material of the negative electrode functional coating of the negative electrode plate in the battery cell to be a porous carbon material, the porous carbon material including, for example, at least one of the following: carbon nanotubes, Super-P, KS-6, mesocarbon microbeads, hard carbon, and graphite, the electrolyte adsorption capacity of the negative electrode plate can be enhanced, thereby improving the electrolyte retention capacity of the negative electrode functional coating of the negative electrode plate, reducing the risk of electrolyte drying or disconnection, and prolonging the cycle life of the battery cell.

In some implementations, the thickness of the negative electrode current collector is 3 µm to 250 µm.

In embodiments of the present application, when the thickness of the negative electrode current collector is set to less than 3 µm, the thickness of the negative electrode current collector is relatively small, prone to localized short-circuit fusing, and the strength of the negative electrode current collector decreases, affecting the safety performance of the battery cell. When the thickness of the negative electrode current collector is set to greater than 250 µm, the thickness of the negative electrode current collector is relatively large, increasing processing costs, and due to spatial constraints within the battery cell, the thickness of the negative electrode current collector has an upper limit. By setting the thickness of the negative electrode current collector to 3 µm to 250 µm, the internal space of the battery and the electrolyte retention performance of the negative electrode plate can be balanced, improving the usage performance of the battery cell.

In some implementations, the thickness of the negative electrode current collector is 4 µm to 30 µm. Thus, by better balancing the internal space of the battery cell and the electrolyte retention performance of the negative electrode plate, the usage performance of the battery cell is improved.

In some implementations, the thickness of the negative electrode functional coating is 0.2 µm to 50 µm.

In embodiments of the present application, when the thickness of the negative electrode functional coating is set to less than 0.2 µm, the thickness of the negative electrode functional coating is set relatively small, resulting in relatively poor electrolyte retention capacity of the negative electrode plate, and making it difficult to replenish electrolyte in the battery cell in cases of excessively insufficient electrolyte or electrolyte depletion in the battery cell, thus affecting the cycle life of the battery cell. When the thickness of the negative electrode functional coating is set to greater than 50 µm, the thickness of the negative electrode functional coating is set relatively large, increasing the ion transport path within the battery cell, thereby increasing the liquid-phase impedance of the battery cell, affecting the specific capacity performance of the battery cell, and reducing the energy density of the battery cell. Additionally, due to spatial constraints within the battery cell, the thickness of the negative electrode functional coating has an upper limit. By setting the thickness of the negative electrode functional coating to 0.2 µm to 50 µm, the internal space of the battery cell and the electrolyte retention capacity of the negative electrode plate can be balanced, effectively mitigating performance degradation of the battery cell and prolonging the cycle life of the battery cell.

In some implementations, the thickness of the negative electrode functional coating is 0.5 µm to 30 µm, and preferably, the thickness of the negative electrode functional coating is 2 µm to 20 µm. Thus, by better balancing the internal space and electrolyte retention capacity of the battery cell, the issue of performance degradation of the battery due to insufficient electrolyte or electrolyte depletion in the battery cell is mitigated, prolonging the cycle life of the battery cell.

According to a second aspect, a battery is provided, including the battery cell according to any one of the above implementations.

According to a third aspect, an electric apparatus is provided, including: the battery according to any one of the above implementations, the battery being configured to provide electrical energy to the electric apparatus.

In some implementations, the electric apparatus may be a vehicle, a ship, or spacecraft.

### BRIEF DESCRIPTION OF DRAWINGS

To more clearly illustrate the technical solutions of the embodiments of the present application, the drawings required for use in the embodiments of the present application are briefly described below. It is apparent that the drawings described below are merely some embodiments of the present application, and those skilled in the art can obtain other drawings based on these drawings without creative effort.
FIG. 1 is a schematic structural diagram of a vehicle according to an embodiment of the present application;
FIG. 2 is a schematic structural diagram of a battery according to an embodiment of the present application;
FIG. 3 is a schematic structural diagram of a battery cell according to an embodiment of the present application;
FIG. 4 is a schematic cross-sectional view of a partial structure of a battery cell according to an embodiment of the present application;
FIG. 5 is a schematic cross-sectional view of a partial structure of another battery cell according to an embodiment of the present application; and
FIG. 6 is a schematic cross-sectional view of a partial structure of still another battery cell according to an embodiment of the present application.

In the drawings, the drawings are not drawn to actual scale.

### DESCRIPTION OF EMBODIMENTS

The implementations of the present application are further described in detail below with reference to the drawings and embodiments. The detailed description and drawings of the following embodiments are used to exemplarily illustrate the principles of the embodiments of the present application but are not intended to limit the scope of the embodiments of the present application, meaning that the embodiments of the present application are not limited to the described embodiments.

Unless otherwise defined, all technical and scientific terms used in the embodiments of the present application have the same meaning as commonly understood by those skilled in the technical field of the embodiments of the present application; the terms used herein are for the purpose of describing specific embodiments only and are not intended to limit the embodiments of the present application; and the terms "include" and "have" and any variations thereof in the description, claims, and the above description of the drawings of the present application are intended to cover non-exclusive inclusion.

In the description of the embodiments of the present application, technical terms such as "first" and "second" are used only to distinguish different objects and should not be construed as indicating or implying relative importance or implying the number, specific order, or primary-secondary relationship of the indicated technical features. In the description of the embodiments of the present application, "multiple" means two or more, unless otherwise explicitly specified.

Reference to "embodiment" in the present application means that a particular feature, structure, or characteristic described in connection with the embodiment may be included in at least one embodiment of the present application. The appearance of this phrase in various places in the specification does not necessarily refer to the same embodiment, nor is it an independent or alternative embodiment mutually exclusive with other embodiments. Those skilled in the art explicitly and implicitly understand that the embodiments described in the present application can be combined with other embodiments.

In the description of the embodiments of the present application, the term "and/or" merely describes an association relationship of associated objects, indicating that three relationships may exist. For example, A and/or B may represent: A alone, both A and B, and B alone. Additionally, the character "/" in this document generally indicates an "or" relationship between the associated objects.

It should be understood that in the description of the embodiments of the present application, the term "multiple" refers to two or more (including two), similarly, "multiple groups" refers to two or more groups (including two groups), and "multiple pieces" refers to two or more pieces (including two pieces).

In the description of the embodiments of the present application, technical terms such as "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," and "circumferential," indicate orientations or positional relationships based on those shown in the drawings, and are only for the convenience of describing the embodiments of the present application and simplifying the description, rather than indicating or implying that the referred means or element must have a specific orientation, be constructed, and operated in a specific orientation, and thus should not be construed as limiting the embodiments of the present application.

In the description of the embodiments of the present application, unless otherwise explicitly specified and limited, technical terms such as "mounting," "connection," "join," and "fixing," should be understood in a broad sense, and may be, for example, a fixed connection, a detachable connection, or an integral connection; may be a mechanical connection or an electrical connection; may be a direct connection or an indirect connection through an intermediate medium; or may be an internal communication or interaction between two elements. Those skilled in the art can understand the specific meanings of the above terms in the embodiments of the present application according to specific situations.

Reference to "embodiment" in the present application means that a particular feature, structure, or characteristic described in connection with the embodiment may be included in at least one embodiment of the present application. The appearance of this phrase in various places in the specification does not necessarily refer to the same embodiment, nor is it an independent or alternative embodiment mutually exclusive with other embodiments. Those skilled in the art explicitly and implicitly understand that the embodiments described in the present application can be combined with other embodiments.

The battery in the embodiments of the present application refers to a physical module including one or more battery cells to provide electrical energy. For example, the battery mentioned in the present application may include a battery module, a battery pack, or the like. The battery generally includes a box for encapsulating one or more battery cells. The box can reduce the impact of liquid or other foreign objects on the charging or discharging of the battery cells.

It should be understood that the battery cells in the embodiments of the present application include, but are not limited to, lithium-ion batteries, sodium-ion batteries, sodium-lithium-ion batteries, lithium metal batteries, sodium metal batteries, lithium-sulfur batteries, magnesium-ion batteries, nickel-hydrogen batteries, nickel-cadmium batteries, and lead-acid batteries.

In some implementations, the battery cell in the embodiments of the present application may be a metal battery, and specifically, the metal battery may include a lithium metal secondary battery, a sodium metal battery, a magnesium metal battery, or the like.

In some implementations, the battery cell generally includes an electrode assembly. The electrode assembly includes a positive electrode, a negative electrode, and a separator. During the charge-discharge process of the battery cell, active ions (for example, lithium ions) intercalate and deintercalate back and forth between the positive electrode and the negative electrode. The separator is disposed between the positive electrode and the negative electrode, preventing short circuits between the positive and negative electrodes while allowing active ions to pass through.

In some implementations, the positive electrode may be a positive electrode plate, and the positive electrode plate may include a positive electrode current collector and a positive electrode active material disposed on at least one surface of the positive electrode current collector.

As an example, the positive electrode current collector has two opposing surfaces in its thickness direction, and the positive electrode active material is disposed on either or both of the two opposing surfaces of the positive electrode current collector.

As an example, the positive electrode current collector may employ a metal foil or a composite current collector. For example, as a metal foil, silver-surface-treated aluminum or stainless steel, stainless steel, copper, aluminum, nickel, carbon electrode, carbon, nickel, or titanium may be used. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

As an example, the positive electrode active material may include at least one of the following materials: lithium-containing phosphate, lithium transition metal oxide, and their respective modified compounds. In some implementations, other conventional materials that can be used as positive electrode active materials for batteries may also be used. These positive electrode active materials may be used alone or in combination of two or more. Examples of the lithium-containing phosphate may include, but are not limited to, at least one of lithium iron phosphate (for example, LiFePO₄, also abbreviated as LFP), a composite material of lithium iron phosphate and carbon, lithium manganese phosphate (for example, LiMnPO₄), a composite material of lithium manganese phosphate and carbon, lithium iron manganese phosphate, and a composite material of lithium iron manganese phosphate and carbon.

As an example, the positive electrode active material may include at least one of sodium transition metal oxide, polyanionic compound, and Prussian blue compound.

In some implementations, the chemical formula of the sodium transition metal oxide may satisfy NaₓMO₂, where M includes one or more of Ti, V, Mn, Co, Ni, Fe, Zn, V, Zr, Ce, Cr, and Cu, and 0 < x ≤ 1. As an example, x in NaₓMO₂ may be 0.1, 0.2, 0.3, 0.4, 0.5, 0.6, 0.7, 0.8, 0.9, or 1.

In some implementations, the sodium transition metal oxide may be a doped modified sodium transition metal oxide, and the doping modification of the sodium transition metal oxide may include at least one of sodium-site doping modification, oxygen-site doping modification, transition metal-site doping modification, and surface coating modification.

In some implementations, the positive electrode may employ a foam metal. The foam metal may be foam nickel, foam copper, foam aluminum, foam alloy, or foam carbon. When foam metal is used as the positive electrode, the surface of the foam metal may not be provided with a positive electrode active material, or certainly it may be provided with a positive electrode active material. As an example, the foam metal may be filled with a lithium source material, potassium metal, or sodium metal, or/and they are deposited therein, where the lithium source material is lithium metal and/or lithium-rich material.

In some implementations, the negative electrode may be a negative electrode plate, and the negative electrode plate may include a negative electrode current collector.

As an example, the negative electrode current collector may employ a metal foil, foam metal, or composite current collector. For example, as a metal foil, silver-surface-treated aluminum or stainless steel, stainless steel, copper, aluminum, nickel, carbon electrode, carbon, nickel, or titanium may be used. The composite current collector may include a polymer material substrate and a metal layer. The foam metal may be foam nickel, foam copper, foam aluminum, foam alloy, foam carbon, or the like. The composite current collector may be formed by forming a metal material (copper, copper alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

In some implementations, the battery cell in the embodiments of the present application may be an anodeless sodium secondary battery.

An anodeless sodium secondary battery refers to a battery cell constructed without actively providing a negative electrode active material layer on the negative electrode side during the manufacturing process of the battery cell, for example, not forming a negative electrode active material layer through processes, such as applying or depositing sodium metal or carbonaceous active material layer at the negative electrode during the manufacturing process of the battery cell. During the first charge, sodium ions gain electrons on the anode side to deposit and form a sodium metal phase on the surface of the current collector; and during discharge, the sodium metal can transform into sodium ions and return to the positive electrode, enabling cyclic charging and discharging. Compared to other sodium secondary batteries, an anodeless sodium secondary battery cell, due to the absence of a negative electrode active material layer, can achieve higher energy density.

In some implementations, to improve the performance of the battery cell, the negative electrode side of the anodeless sodium secondary battery may be provided with some functional coatings, such as carbonaceous materials, metal oxides, or alloys, to enhance the conductivity of the negative electrode current collector and improve the uniformity of sodium metal deposition.

In some implementations, the CB value of the anodeless sodium secondary battery is less than or equal to 0.1.

Specifically, the CB value is the capacity per unit area of the negative electrode plate of the secondary battery divided by the capacity per unit area of the positive electrode plate. Since the anodeless battery contains no or only a small amount of functional coating, the capacity per unit area of the negative electrode plate is small, and the CB value of the secondary battery is less than or equal to 0.1.

In some implementations, the material of the positive electrode current collector may be aluminum, and the material of the negative electrode current collector may be copper.

In some implementations, the electrode assembly further includes a separator, the separator being disposed between the positive electrode and the negative electrode.

In some implementations, the separator is a separating film. The embodiments of the present application do not impose specific restrictions on the type of separating film, and any known porous structure separating film with good chemical and mechanical stability may be used.

As an example, the main material of the separating film may be selected from at least one of glass fiber, non-woven fabric, polyethylene, polypropylene, polyvinylidene fluoride, and ceramic.

In some implementations, the separator is a solid-state electrolyte. The solid-state electrolyte is disposed between the positive electrode and the negative electrode, simultaneously serving to conduct ions and isolate the positive and negative electrodes.

In some implementations, the battery cell further includes an electrolyte, the electrolyte serving to conduct ions between the positive and negative electrodes. The embodiments of the present application do not impose specific restrictions on the type of electrolyte, which may be selected according to needs. The electrolyte may be liquid, gel, or solid.

In some implementations, the electrode assembly may be a wound structure. The positive electrode plate and the negative electrode plate are wound into a wound structure.

In some implementations, the electrode assembly is a laminated structure. As an example, multiple positive electrode plates and multiple negative electrode plates may be provided, and the multiple positive electrode plates and the multiple negative electrode plates are alternately stacked.

As an example, multiple positive electrode plates may be provided, and the negative electrode plate is folded to form multiple stacked folding segments, with a positive electrode plate sandwiched between adjacent folding segments.

As an example, both the positive electrode plate and the negative electrode plate are folded to form multiple stacked folding segments.

As an example, multiple separators may be provided, separately disposed between any adjacent positive electrode plates or negative electrode plates.

As an example, the separator may be continuously disposed, arranged between any adjacent positive electrode plates or negative electrode plates by folding or winding.

In some implementations, the shape of the electrode assembly may be cylindrical, flat, prismatic, or the like.

In some implementations, the electrode assembly is provided with tabs, and the tabs can conduct current from the electrode assembly. The tabs include a positive electrode tab and a negative electrode tab.

In some implementations, the battery cell may include a housing. The housing is used to encapsulate components such as the electrode assembly and the electrolyte. The housing may be a steel housing, aluminum housing, plastic housing (for example, polypropylene), composite metal housing (for example, copper-aluminum composite housing), aluminum-plastic film, or the like.

As an example, the battery cell may be a cylindrical battery cell, a prismatic battery cell, a pouch battery cell, or a battery cell of other shapes. The prismatic battery cell includes a square-shell battery cell, a blade-shaped battery cell, or a multi-prismatic battery, the multi-prismatic battery being, for example, a hexagonal prismatic battery.

To meet different power demands, the battery in the embodiments of the present application may include multiple battery cells, where the multiple battery cells may be connected in series, parallel, or series-parallel, being connected in series-parallel referring to a mix of series and parallel connections. Optionally, multiple battery cells may first be connected in series, parallel, or series-parallel to form a battery module, and then multiple battery modules may be connected in series, parallel, or series-parallel to form a battery. In other words, multiple battery cells may directly form a battery, or they may first form battery modules, and the battery modules then form a battery. The battery is further disposed in an electric apparatus to provide electrical energy to the electric apparatus.

Currently, during the charge-discharge process of a battery, for example, in metal batteries, the thickness of the negative electrode plate of the battery is typically set relatively small, resulting in relatively poor electrolyte retention capacity on the negative electrode plate side. During the charge-discharge process of the battery, the electrolyte is continuously consumed, and localized depletion of the electrolyte may occur, leading to performance degradation of the battery and affecting the cycle life of the battery. Additionally, during the charge-discharge process of the battery, the negative electrode plate undergoes partial swelling, compressing the electrolyte between the negative electrode plate and the separator, and posing a risk of electrolyte drying or disconnection on the negative electrode side. If the electrolyte in the battery is not replenished in time, it further affects the cycle life of the battery and degrade the usage performance of the battery.

In view of this, embodiments of the present application provide a battery cell, a battery, and an electric apparatus, the battery cell including an electrode assembly, the electrode assembly including a negative electrode plate, a positive electrode plate, and a separator, and the separator being configured to isolate the negative electrode plate and the positive electrode plate; where a ratio of a thickness *H*₁ of the separator to a thickness *H*₂ of the negative electrode plate is greater than or equal to 0.07. In embodiments of the present application, by setting the ratio of the thickness *H*₁ of the separator to the thickness *H*₂ of the negative electrode plate to be greater than or equal to 0.07, increasing the thickness *H*₁ of the separator enables retention of more electrolyte, and mitigating the issue of performance degradation of the battery cell caused by insufficient electrolyte or electrolyte depletion in the battery cell, thereby prolonging the cycle life of the battery cell.

The technical solutions described in the embodiments of the present application are applicable to various electric apparatuses using batteries.

The electric apparatus may be a vehicle, a mobile phone, a portable device, a laptop computer, a ship, a spacecraft, an electric toy, an electric tool, or the like. The vehicle may be a fuel vehicle, a gas vehicle, or a new energy vehicle, and the new energy vehicle may be a pure electric vehicle, a hybrid vehicle, or an extended-range vehicle; spacecraft include an airplane, a rocket, a space shuttle, a spaceship, and the like; the electric toy includes a fixed or mobile electric toy, such as a game console, an electric car toy, an electric ship toy, and an electric airplane toy; and the electric tool includes a metal cutting tool, a grinding tool, an assembly tool, and a railway tool, such as an electric drill, an electric grinder, an electric wrench, an electric screwdriver, an electric hammer, an impact drill, a concrete vibrator, and an electric planer.

It should be understood that the technical solutions described in the embodiments of the present application are not limited to the electric apparatuses described above but can be applied to all devices using batteries. For brevity, the following embodiments take the electric apparatus as a vehicle as an example for detailed description.

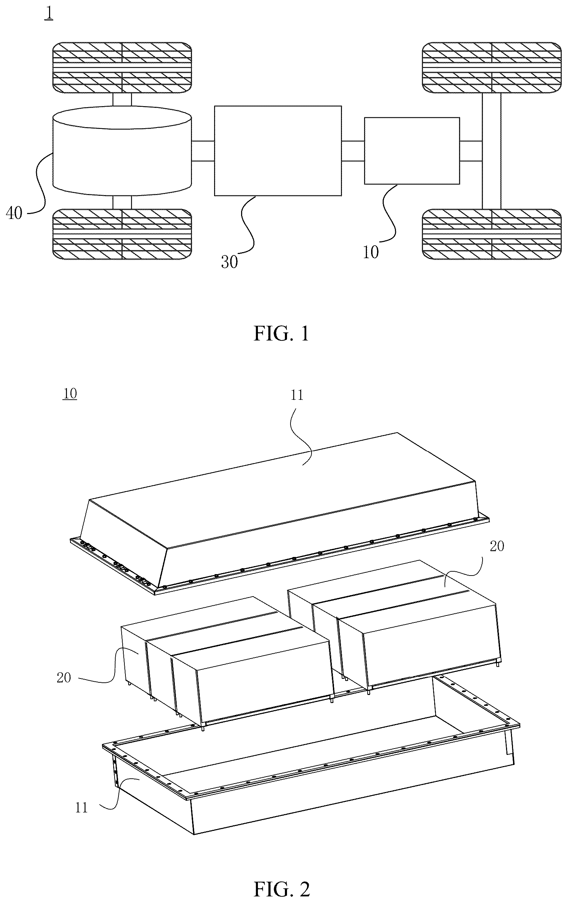

For example, as shown in FIG. 1, FIG. 1 is a schematic structural diagram of a vehicle 1 according to an embodiment of the present application. The vehicle 1 may be a fuel vehicle, a gas vehicle, or a new energy vehicle, and the new energy vehicle may be a pure electric vehicle, a hybrid vehicle, an extended-range vehicle, or the like. The interior of the vehicle 1 may be provided with a motor 40, a controller 30, and a battery 10, the controller 30 being configured to control the battery 10 to supply power to the motor 40. For example, the battery 10 may be disposed at the bottom, front, or rear of the vehicle 1. The battery 10 may be used for powering the vehicle 1. For example, the battery 10 may serve as an operational power source for the vehicle 1, used for the circuit system of the vehicle 1, such as for the startup and navigation of the vehicle 1, and operational power demands during driving. In another implementation of the present application, the battery 10 may not only serve as an operational power source for the vehicle 1 but also as a driving power source of the vehicle 1, replacing or partially replacing fuel or natural gas to provide driving power for the vehicle 1.

To meet different power usage demands, the battery 10 in the embodiments of the present application may be a battery cell group or a battery pack. The battery 10 may include at least one battery cell group, the battery cell group including multiple battery cells, where the multiple battery cells may be electrically connected in series, parallel, or series-parallel to form the battery 10, being connected in series-parallel referring to a mix of series and parallel connections. The battery 10 may also be referred to as a battery pack. For example, multiple battery cells may first be connected in series, parallel, or series-parallel to form a battery module, and then multiple battery modules may be connected in series, parallel, or series-parallel to form the battery 10. In other words, multiple battery cells may directly form the battery 10, or they may first form battery modules, and the battery modules then form the battery 10.

In some implementations, the battery 10 may include multiple battery cells. For example, as shown in FIG. 2, FIG. 2 is a schematic structural diagram of a battery 10 according to an embodiment of the present application. The battery 10 may include multiple battery cells 20. The battery 10 may further include a box 11, the interior of the box 11 being a hollow structure, and the multiple battery cells 20 being accommodated within the box 11. For example, the multiple battery cells 20 may be combined in parallel, series, or series-parallel and placed within the box 11.

In some implementations, the battery 10 may further include other structures, which are not described in detail herein. For example, the battery 10 may further include a busbar component, the busbar component being used to achieve electrical connections between the multiple battery cells 20, such as parallel connection, series connection, or series-parallel connection. Specifically, the busbar component may achieve electrical connections between the battery cells 20 by connecting the electrode terminals of the battery cells 20. Further, the busbar component may be fixed to the electrode terminals of the battery cells 20 by welding. The electrical energy of the multiple battery cells 20 may be further led out through a conductive mechanism passing through the box. Optionally, the conductive mechanism may also belong to the busbar component.

In the embodiments of the present application, depending on different power demands, the number of battery cells 20 may be set to any value. The multiple battery cells 20 may be connected in series, parallel, or series-parallel to achieve greater capacity or power. Since the number of battery cells 20 included in each battery 10 may be large, to facilitate mounting, the battery cells 20 may be arranged in groups, with each group of battery cells 20 forming a battery module. The number of battery cells 20 included in the battery module is not limited and can be set according to needs. The battery 10 may include multiple battery modules, and the battery modules may be connected in series, parallel, or series-parallel.

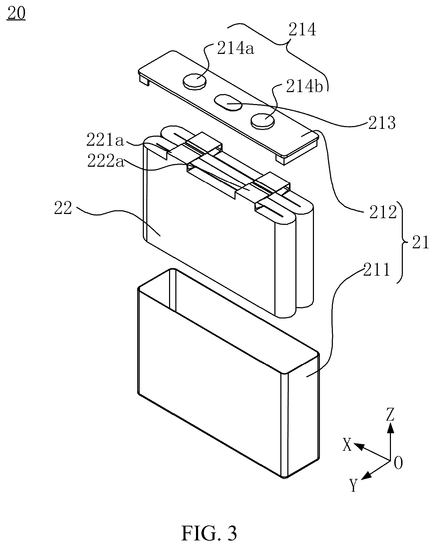

As shown in FIG. 3, FIG. 3 is a schematic structural diagram of a battery cell 20 according to an embodiment of the present application. The battery cell 20 includes one or more electrode assemblies 22, a housing body 211, and a cover plate 212. The housing body 211 and the cover plate 212 form a housing or battery box 21. The walls of the housing body 211 and the cover plate 212 are referred to as the walls of the battery cell 20, where for a rectangular parallelepiped battery cell 20, the walls of the housing body 211 include a bottom wall and four side walls. The housing body 211 is determined depending on the shape of one or more electrode assemblies 22 combined. For example, the housing body 211 may be a hollow rectangular parallelepiped, cube, or cylinder, and one face of the housing body 211 has an opening to allow one or more electrode assemblies 22 to be placed within the housing body 211. For example, when the housing body 211 is a hollow rectangular parallelepiped or cube, one of the planes of the housing body 211 is an open face, meaning that the plane does not have a wall, allowing the interior and exterior of the housing body 211 to communicate. When the housing body 211 is a hollow cylinder, the end face of the housing body 211 is an open face, meaning that the end face does not have a wall, allowing the interior and exterior of the housing body 211 to communicate. The cover plate 212 covers the opening and is connected to the housing body 211 to form a closed cavity for placing the electrode assembly 22. The housing body 211 is filled with an electrolyte, such as liquid electrolyte.

The battery cell 20 may further include two electrode terminals 214, and the two electrode terminals 214 may be disposed on the cover plate 212. The cover plate 212 is generally flat, and the two electrode terminals 214 are fixed on the flat surface of the cover plate 212, the two electrode terminals 214 being a positive electrode terminal 214a and a negative electrode terminal 214b, respectively. Each electrode terminal 214 is correspondingly provided with a connecting member, or also referred to as a current collecting member, located between the cover plate 212 and the electrode assembly 22, for electrically connecting the electrode assembly 22 to the electrode terminal 214.

As shown in FIG. 3, each electrode assembly 22 has a first tab 221a and a second tab 222a. The first tab 221a and the second tab 222a have opposite polarities. For example, when the first tab 221a is a positive electrode tab, the second tab 222a is a negative electrode tab.

In the battery cell 20, depending on actual usage requirements, one or more electrode assemblies 22 may be provided, as shown in FIG. 3, where four independent electrode assemblies 22 are provided within the battery cell 20.

The battery cell 20 may also be provided with a pressure relief mechanism 213. The pressure relief mechanism 213 is configured to actuate when the internal pressure or temperature of the battery cell 20 reaches a threshold to release the internal pressure or temperature.

The pressure relief mechanism 213 may be of various possible pressure relief structures. For example, the pressure relief mechanism 213 may be a temperature-sensitive pressure relief mechanism, and the temperature-sensitive pressure relief mechanism is configured to melt when the internal temperature of the battery cell 20 provided with the pressure relief mechanism 213 reaches a threshold; and/or the pressure relief mechanism 213 may be a pressure-sensitive pressure relief mechanism, and the pressure-sensitive pressure relief mechanism is configured to rupture when the internal air pressure of the battery cell 20 provided with the pressure relief mechanism 213 reaches a threshold.

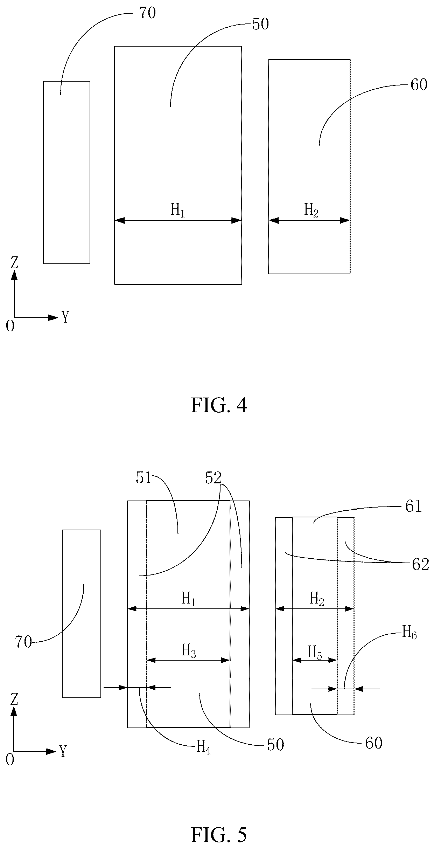

FIG. 4 is a schematic cross-sectional view of a partial structure of a battery cell 20 according to an embodiment of the present application. As shown in FIG. 4, the battery cell 20 includes a separator 50, a negative electrode plate 60, and a positive electrode plate 70. An electrolyte fills a space between the positive electrode plate 70 and the separator 50, and a space between the negative electrode plate 60 and the separator 50.

In some implementations, the battery cell 20 includes an electrode assembly 22, the electrode assembly 22 including a negative electrode plate 60, a positive electrode plate 70, and a separator 50, and the separator 50 being configured to isolate the negative electrode plate 60 and the positive electrode plate 70; where a ratio of a thickness *H*₁ of the separator 50 to a thickness *H*₂ of the negative electrode plate 60 is greater than or equal to 0.07.

In embodiments of the present application, since the thickness *H*₂ of the negative electrode plate 60 affects the formation of a passivation film on the surface of the negative electrode plate 60, a relatively large thickness *H*₂ of the negative electrode plate 60 may lead to a relatively low initial charge capacity of the battery 10, affecting the charge-discharge efficiency of the negative electrode plate 60 and reducing the energy density of the battery 10. Therefore, the thickness *H*₂ of the negative electrode plate 60 is typically set within an appropriate range. When the ratio of the thickness *H*₁ of the separator 50 to the thickness *H*₂ of the negative electrode plate 60 is set to be greater than or equal to 0.07, increasing the thickness *H*₁ of the separator 50 enables retention of more electrolyte, mitigating the issue of performance degradation of the battery 10 caused by insufficient electrolyte or electrolyte depletion in the battery 10, thereby prolonging the cycle life of the battery 10.

In some implementations, the thickness *H*₁ of the separator 50 and the thickness *H*₂ of the negative electrode plate 60 satisfy: 0.07 ≤ *H*₁/*H*₂ ≤ 241.18, and preferably, the thickness *H*₁ of the separator 50 and the thickness *H*₂ of the negative electrode plate 60 satisfy: 0.15 ≤ *H*₁/*H*₂ ≤ 220.59.

In embodiments of the present application, if *H*₁/*H*₂ < 0.07, the thickness *H*₁ of the separator 50 is set relatively small, resulting in relatively poor electrolyte retention capacity of the separator 50, which may lead to excessively insufficient electrolyte or electrolyte depletion in the battery 10, causing usage performance degradation of the battery 10 and affecting the cycle life of the battery 10. If *H*₁/*H*₂ > 241.18, the thickness *H*₁ of the separator 50 is set relatively large, increasing the ion transport path within the battery cell 20, thereby increasing the liquid-phase impedance of the battery cell 20, affecting the specific capacity performance of the battery cell 20, and reducing the energy density of the battery cell 20. Additionally, due to spatial constraints within the battery cell 20, the thickness *H*₁ of the separator 50 has an upper limit. Therefore, by setting the ratio of the thickness *H*₁ of the separator 50 to the thickness *H*₂ of the negative electrode plate 60 in the battery cell 20 to: 0.07 ≤ *H*₁/*H*₂ ≤ 241.18, or by setting the ratio of the thickness *H*₁ of the separator 50 to the thickness *H*₂ of the negative electrode plate 60 in the battery cell 20 to: 0.15 ≤ *H*₁/*H*₂ ≤ 220.59 , the issue of usage performance degradation of the battery cell 20 due to insufficient electrolyte or electrolyte depletion in the battery cell 20 can be effectively mitigated while balancing the internal space and electrolyte retention capacity of the battery cell 20, thereby prolonging the cycle life of the battery cell 20 and improving the specific capacity performance of the battery cell 20.

In view of this, the value of *H*₁ /*H*₂ in the embodiments of the present application should not be set too large or too small. Exemplarily, the value of *H*₁/*H*₂ in the embodiments of the present application may be: 0.07, 0.09, 0.10, 0.15, 0.20, 0.30, 0.31, 0.36, 0.40, 0.44, 0.60, 0.71, 0.80, 0.86, 0.89, 1.00, 1.14, 1.16, 1.20, 1.25, 1.33, 1.43, 1.50, 1.67, 1.90, 2.00, 2.14, 2.50, 2.86, 3.00, 3.50, 3.57, 3.75, 4.00, 4.29, 4.50, 5.00, 5.50, 6.00, 6.50, 7.00, 7.50, 8.00, 8.50, 9.00, 9.50, 10.00, 20.00, 21.43, 26.79, 30.00, 37.50, 40.00, 50.00, 60.00, 70.00, 75.00, 80.00, 90.00, 100.00, 110.00, 120.00, 130.00, 140.00, 150.00, 160.00, 170.00, 180.00, 190.00, 200.00, 210.00, 220.00, 220.59, 230.00, 235.29, 240.00, 241.18, or a value within a range defined by any two of these values.

In some implementations, the thickness *H*₁ of the separator 50 and the thickness *H*₂ of the negative electrode plate 60 satisfy: 1.16 ≤ *H*₁/*H*₂ ≤ 75, and preferably, the thickness *H*₁ of the separator 50 and the thickness *H*₂ of the negative electrode plate 60 satisfy: 1.16 ≤ *H*₁/*H*₂ ≤ 21.43.

In embodiments of the present application, by setting the thickness *H*₁ of the separator 50 and the thickness *H*₂ of the negative electrode plate 60 in the battery cell 20 to: 1.16 ≤ *H*₁/*H*₂ ≤ 75, or by setting the thickness *H*₁ of the separator 50 and the thickness *H*₂ of the negative electrode plate 60 in the battery cell 20 to: 1.16 ≤ *H*₁/*H*₂ ≤ 21.43, the internal space of the battery cell 20 and the electrolyte retention capacity of the battery cell 20 can be better balanced, effectively mitigating the issue of performance degradation of the battery cell 20 due to insufficient electrolyte or electrolyte depletion in the battery cell 20, thereby prolonging the cycle life of the battery cell 20.

In some implementations, the ratio of the thickness *H*₁ of the separator 50 to the thickness *H*₂ of the negative electrode plate 60 satisfies: 1.20 ≤ *H*₁/*H*₂ ≤ 10. Thus, in embodiments of the present application, by setting the thickness *H*₁ of the separator 50 and the thickness *H*₂ of the negative electrode plate 60 to: 1.20 ≤ *H*₁/*H*₂ ≤ 10, the internal space of the battery cell 20 and electrolyte retention capacity of the battery cell 20 can be better balanced, effectively mitigating the issue of performance degradation of the battery cell 20 due to insufficient electrolyte or electrolyte depletion of the battery cell 20, thereby prolonging the cycle life of the battery cell 20.

It should be understood that in some implementations, in the embodiments of the present application, the thickness *H*₁ of the separator 50 should not be set too large or too small. In some implementations, the thickness *H*₁ of the separator 50 has a value range of [3 µm, 750 µm]. When the thickness *H*₁ of the separator 50 is less than 3 µm, thickness *H*₁ of the separator 50 is set relatively small, resulting in relatively poor electrolyte retention capacity of the separator 50, and making it difficult to replenish electrolyte in the battery 10 in cases of excessively insufficient electrolyte or electrolyte depletion in the battery cell 20, thus affecting the cycle life of the battery cell 20. When the thickness *H*₁ of the separator 50 is greater than 750 µm, the thickness *H*₁ of the separator 50 is set relatively large, increasing the ion transport path within the battery cell 20, thereby increasing the liquid-phase impedance of the battery cell 20, affecting the specific capacity performance of the battery cell 20, and reducing the energy density of the battery cell 20. Additionally, due to spatial constraints within the battery cell 20, the thickness *H*₁ of the separator 50 has an upper limit. By setting the thickness *H*₁ of the separator 50 to [3 µm, 750 µm], the internal space and electrolyte retention capacity of the battery cell 20 can be balanced, prolonging the cycle life of the battery cell 20.

In view of this, the thickness *H*₁ of the separator 50 in the embodiments of the present application may be set to 3 µm, 4 µm, 5 µm, 6 µm, 7 µm, 8 µm, 9 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, 100 µm, 150 µm, 200 µm, 250 µm, 300 µm, 350 µm, 400 µm, 450 µm, 500 µm, 550 µm, 600 µm, 650 µm, 700 µm, 750 µm, or a value within a range defined by any two of these values.

In some implementations, exemplarily, the thickness *H*₁ of the separator 50 may also have a value range of [5 µm, 150 µm].

It should be understood that in some implementations, in the embodiments of the present application, the thickness *H*₂ of the negative electrode plate 60 should not be set too large or too small. In some implementations, the thickness *H*₂ of the negative electrode plate 60 has a value range of [3 µm, 150 µm]. When the thickness *H*₂ of the negative electrode plate 60 is less than 3 µm, the thickness *H*₂ of the negative electrode plate 60 is set relatively small, resulting in relatively poor electrolyte retention capacity of the negative electrode plate 60, and making it difficult to replenish electrolyte in the battery cell 20 in cases of excessively insufficient electrolyte or electrolyte depletion in the battery cell 20, thus affecting the cycle life of the battery cell 20. When the thickness *H*₂ of the negative electrode plate 60 is greater than 150 µm, the thickness *H*₂ of the negative electrode plate 60 is set relatively large, increasing the ion transport path within the battery cell 20, thereby increasing the liquid-phase impedance of the battery cell 20, affecting the specific capacity performance of the battery cell 20, and reducing the energy density of the battery cell 20. Additionally, due to spatial constraints within the battery cell 20, the thickness *H*₂ of the negative electrode plate 60 has an upper limit. By setting the thickness *H*₂ of the negative electrode plate 60 to [3 µm, 150 µm], the internal space and electrolyte retention capacity of the battery cell 20 can be balanced, prolonging the cycle life of the battery cell 20.

In view of this, the thickness *H*₂ of the negative electrode plate 60 in the embodiments of the present application may be set to 3 µm, 7 µm, 9 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, 100 µm, 110 µm, 120 µm, 130 µm, 140 µm, 150 µm, or a value within a range defined by any two of these values.

In some implementations, exemplarily, the thickness *H*₂ of the negative electrode plate 60 may also have a value range of [4 µm, 90 µm].

FIG. 5 is a schematic cross-sectional view of a partial structure of another battery cell 20 according to an embodiment of the present application. In some implementations, the separator 50 includes a separator body 51 and a functional separator coating 52 disposed on a surface of the separator body 51, the functional separator coating 52 being disposed on one side surface or two side surfaces of the separator body 51. Exemplarily, as shown in FIG. 5, the functional separator coating 52 in the separator 50 is disposed on two side surfaces of the separator body 51.

In embodiments of the present application, by providing a functional separator coating 52 on one side surface or two side surfaces of the separator body 51 of the separator 50, the electrolyte retention capacity of the separator 50 can be enhanced through the functional separator coating 52, enabling timely replenishment of electrolyte in cases of insufficient electrolyte or electrolyte depletion in the battery cell 20, effectively reducing usage performance degradation of the battery cell 20, and prolonging the cycle life of the battery cell 20.

In some implementations, a material of the functional separator coating 52 in the embodiments of the present application includes at least one of the following: polyvinylidene fluoride copolymer, sodium carboxymethyl cellulose, polystyrene-butadiene copolymer, hydrogenated styrene-butadiene block copolymer, hydrogenated styrene-isoprene block copolymer, ethylene-butene copolymer, polypropylene-octene thermoplastic elastomer, ethylene-octene thermoplastic elastomer, and propylene-ethylene copolymer.

In embodiments of the present application, by setting the material of the functional separator coating 52 of the separator 50 in the battery cell 20 to at least one of the following: polyvinylidene fluoride copolymer, sodium carboxymethyl cellulose, polystyrene-butadiene copolymer, hydrogenated styrene-butadiene block copolymer, hydrogenated styrene-isoprene block copolymer, ethylene-butene copolymer, polypropylene-octene thermoplastic elastomer, ethylene-octene thermoplastic elastomer, and propylene-ethylene copolymer, the reversible compression capability of the functional separator coating 52 of the separator 50 can be enhanced, enabling it to buffer volume swelling of the negative electrode plate 60 during the charge-discharge process of the battery cell 20, thereby mitigating performance degradation of the battery cell 20.

In embodiments of the present application, the thickness *H*₃ of the separator body 51 in the separator 50 should not be set too large or too small. Specifically, the thickness *H*₃ of the separator body 51 may be set according to practical applications.

In some implementations, the thickness *H*₃ of the separator body 51 has a value range of [3 µm, 250 µm]. In embodiments of the present application, when the thickness *H*₃ of the separator body 51 is set to less than 3 µm, the thickness *H*₃ of the separator body 51 is set relatively small, resulting in relatively poor overall electrolyte retention capacity of the separator 50, and making it difficult to replenish electrolyte in the battery cell 20 in cases of excessively insufficient electrolyte or electrolyte depletion in the battery cell 20, thus affecting the cycle life of the battery cell 20. When the thickness *H*₃ of the separator body 51 is set to greater than 250 µm, the thickness *H*₃ of the separator body 51 is relatively large, increasing the ion transport path within the battery cell 20, thereby increasing the liquid-phase impedance of the battery cell 20, affecting the specific capacity performance of the battery cell 20, and reducing the energy density of the battery cell 20. Additionally, due to spatial constraints within the battery cell 20, the thickness *H*₃ of the separator body 51 has an upper limit. By setting the thickness *H*₃ of the separator body 51 to 3 µm to 250 µm, the internal space and electrolyte retention capacity of the battery cell 20 can be balanced, effectively reducing performance degradation of the battery cell 20 and prolonging the cycle life of the battery cell 20.

Exemplarily, the thickness *H*₃ of the separator body 51 in the separator 50 in the embodiments of the present application may be set to 3 µm, 5 µm, 7 µm, 8 µm, 9 µm, 10 µm, 12 µm, 15 µm, 20 µm, 25 µm, 30 µm, 50 µm, 70 µm, 90 µm, 110 µm, 130 µm, 150 µm, 170 µm, 190 µm, 210 µm, 230 µm, 250 µm, or a value within a range defined by any two of these values.

In some implementations, exemplarily, the thickness *H*₃ of the separator body 51 has a value range of [5 µm, 50 µm].

Accordingly, in embodiments of the present application, the thickness *H*₄ of the functional separator coating 52 in the separator 50 should not be set too large or too small. The thickness *H*₄ of the functional separator coating 52 may be set according to practical applications.

In some implementations, the thickness *H*₄ of the functional separator coating 52 is [0.1 µm, 250 µm]. When the thickness *H*₄ of the functional separator coating 52 is set to less than 0.1 µm, the thickness *H*₄ of functional separator coating 52 is set relatively small, resulting in relatively poor overall electrolyte retention capacity of the separator 50, and making it difficult to replenish electrolyte in the battery 10 in cases of excessively insufficient electrolyte or electrolyte depletion in the battery cell 20, thus affecting the cycle life of the battery cell 20. When the thickness *H*₄ of the functional separator coating 52 is set to greater than 250 µm, the thickness *H*₄ the functional separator coating 52 is set relatively large, increasing the ion transport path within the battery cell 20, thereby increasing the liquid-phase impedance of the battery cell 20, affecting the specific capacity performance of the battery cell 20, and reducing the energy density of the battery cell 20. Additionally, due to spatial constraints within the battery cell 20, the thickness *H*₄ of the functional separator coating 52 has an upper limit. By setting the thickness *H*₄ of the functional separator coating 52 to 0.1 µm to 250 µm, the internal space and electrolyte retention capacity of the battery cell 20 can be balanced, prolonging the cycle life of the battery cell 20.

Exemplarily, the thickness *H*₄ of the functional separator coating 52 in the separator 50 in the embodiments of the present application may be set to 0.1 µm, 0.2 µm, 0.3 µm, 0.4 µm, 0.5 µm, 0.7 µm, 0.9 µm, 1 µm, 2 µm, 3 µm, 5 µm, 6 µm, 7 µm, 9 µm, 10 µm, 15 µm, 20 µm, 25 µm, 30 µm, 50 µm, 70 µm, 90 µm, 110 µm, 130 µm, 150 µm, 170 µm, 190 µm, 210 µm, 230 µm, 250 µm, or a value within a range defined by any two of these values.

In some implementations, the thickness *H*₄ of the functional separator coating 52 is [0.5 µm, 50 µm], and preferably, the thickness *H*₄ of the functional separator coating 52 is [2 µm, 20 µm]. Thus, in embodiments of the present application, by better balancing the internal space and electrolyte retention capacity of the battery cell 20, the cycle life of the battery cell 20 is prolonged.

In some implementations, the functional separator coating 52 in the embodiments of the present application is a hollow resilient structure. It should be understood that the hollow resilient structure in the embodiments of the present application refers to a structure that can be compressed under external pressure and can recover to its uncompressed initial state after the pressure is removed.

In embodiments of the present application, by configuring the functional separator coating 52 in the separator 50 as a hollow resilient structure, the hollow structure can store a relatively large amount of electrolyte, enabling timely replenishment of electrolyte in cases of insufficient electrolyte or electrolyte depletion in the battery cell 20, effectively reducing usage performance degradation of the battery cell 20, and prolonging the cycle life of the battery cell 20; and the hollow resilient structure of the functional separator coating 52 can buffer volume swelling of the electrode plate during the charge-discharge process of the battery cell 20, while reducing the risk of electrolyte drying or disconnection due to electrode plate volume swelling.

In some implementations, the hollow resilient structure in the embodiments of the present application includes a non-closed pore structure. Thus, in embodiments of the present application, by configuring the functional separator coating 52 as a hollow resilient structure, with the hollow resilient structure including a non-closed pore structure, during the charge-discharge process of the battery cell 20, when the electrode plate undergoes volume swelling and compresses the hollow resilient structure, the electrolyte within the hollow resilient structure can be discharged through the non-closed pore structure, enabling timely replenishment of electrolyte in the battery cell 20, reducing the risk of electrolyte drying or disconnection, and prolonging the cycle life of the battery cell 20.

In some implementations, at least one opening of the pore structure faces the negative electrode plate 60. Thus, in embodiments of the present application, by orienting at least one opening of the pore structure toward the negative electrode plate 60, during the charge-discharge process of the battery cell 20, when the negative electrode plate 60 undergoes volume swelling and compresses the hollow resilient structure, causing a reduction or depletion of electrolyte between the separator 50 and the negative electrode plate 60, the electrolyte stored within the hollow resilient structure can be discharged through the at least one opening of the pore structure to replenish the electrolyte between the separator 50 and the negative electrode plate 60, effectively reducing the risk of electrolyte drying or disconnection between the separator 50 and the negative electrode plate 60, thereby prolonging the cycle life of the battery cell 20.

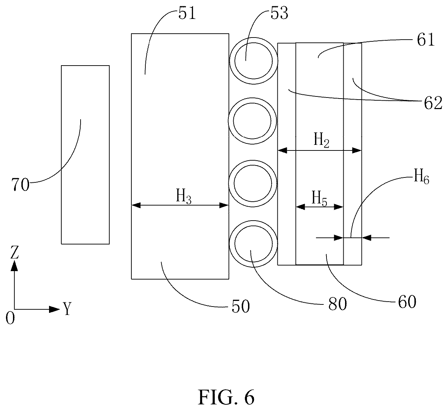

FIG. 6 is a schematic cross-sectional view of a partial structure of another battery cell 20 according to an embodiment of the present application. In some implementations, as shown in FIG. 6, the hollow resilient structure in the embodiments of the present application includes multiple non-closed hollow resilient microspheres 80 arranged along the surface of the separator body 51. Thus, in embodiments of the present application, the hollow resilient structure can store electrolyte through the multiple non-closed hollow resilient microspheres 80 arranged along the surface of the separator body 51. The multiple non-closed hollow resilient microspheres 80 can store electrolyte, enabling timely replenishment of electrolyte in cases of insufficient electrolyte or electrolyte depletion in the battery cell 20, effectively reducing usage performance degradation of the battery cell 20, and prolonging the cycle life of the battery cell 20. In addition, during the charge-discharge process of the battery cell 20, when the negative electrode plate 60 undergoes volume swelling and compresses the hollow resilient structure, the hollow resilient microspheres 80 can buffer the negative electrode plate 60, and when the volume swelling of the negative electrode plate 60 compresses the separator, causing a reduction or depletion of electrolyte between the negative electrode plate 60 and the separator 50, the electrolyte stored within the hollow resilient microspheres 80 can be compressed and discharged by the negative electrode plate 60, enabling timely replenishment of electrolyte between the separator 50 and the negative electrode plate 60, thus effectively reducing the risk of electrolyte drying or disconnection between the separator 50 and the negative electrode plate 60.

In some implementations, the diameter of the multiple non-closed hollow resilient microspheres 80 arranged along the surface of the separator body 51 in the embodiments of the present application may be set to [1 µm, 50 µm], and the wall thickness of the hollow resilient microspheres 80 may be set to [50 nm, 2 µm]. Specifically, the diameter or wall thickness of the hollow resilient microspheres 80 may be set according to actual needs.

In some implementations, the specific surface area of the pore structure in the embodiments of the present application is 0.5 m²/g to 10 m²/g. Thus, in embodiments of the present application, the specific surface area of the pore structure being less than 0.5 m²/g indicates a relatively small amount of pore structures of the material, resulting in relatively poor adsorption capacity, and making it difficult to store electrolyte through the pore structure. When the specific surface area of the pore structure is greater than 10 m²/g, the processing difficulty of the pore structure increases, raising manufacturing costs. Thus, by setting the specific surface area of the pore structure to 0.5 m²/g to 10 m²/g, the pore structure can have good electrolyte storage capacity, and during the charge-discharge process of the battery cell 20, when the electrode plate undergoes volume swelling and compresses the hollow resilient structure, the electrolyte within the hollow resilient structure can be smoothly discharged through the non-closed pore structure, enabling timely replenishment of electrolyte in the battery cell 20, reducing the risk of electrolyte drying or disconnection, and prolonging the cycle life of the battery cell 20.

It should be understood that in the embodiments of the present application, the specific surface area of the pore structure should not be set too large or too small, and the specific surface area of the pore structure may be set according to practical applications. Exemplarily, the specific surface area of the pore structure in the embodiments of the present application may be set to: 0.5 m²/g, 1 m²/g, 1.5 m²/g, 2 m²/g, 2.5 m²/g, 3 m²/g, 3.5 m²/g, 4 m²/g, 4.5 m²/g, 5 m²/g, 5.5 m²/g, 6.5 m²/g, 7 m²/g, 7.5 m²/g, 8 m²/g, 8.5 m²/g, 9 m²/g, 9.5 m²/g, 10 m²/g, or a value within a range defined by any two of these values.

In some implementations, the compression percentage of the separator 50 in the embodiments of the present application is [8%, 95%]. Thus, in embodiments of the present application, by setting the compression percentage of the separator 50 to 8% to 95%, during the charge-discharge process of the battery cell 20, the separator 50 can buffer the electrode plate undergoing volume swelling, improving the usage performance of the battery cell 20.

Specifically, the compression percentage of the separator 50 in the embodiments of the present application may be 8%, 10%, 12%, 14%, 16%, 18%, 20%, 25%, 30%, 35%, 40%, 45%, 50%, 55%, 60%, 65%, 70%, 75%, 80%, 85%, 90%, 95%, or a value within a range defined by any two of these values.

In some implementations, exemplarily, the compression percentage of the separator 50 in the embodiments of the present application is [20%, 80%].

In some implementations, the compressive strength range of the separator 50 in the embodiments of the present application is [0.05 MPa, 10 MPa]. Thus, in embodiments of the present application, when the compressive strength range of the separator 50 is less than 0.05 MPa, during the charge-discharge process of the battery cell 20, the electrode plate previously subjected to volume swelling may compress the separator 50, easily causing deformation or damage to the separator 50. When the compressive strength range of the separator 50 is greater than 10 MPa, the compressive strength of the separator 50 is relatively high, making it difficult to buffer the electrode plate previously subjected to volume swelling during the charge-discharge process of the battery cell 20, affecting the usage performance of the battery cell 20, and reducing the cycle life of the battery cell 20. By setting the compressive strength range of the separator 50 to 0.05 MPa to 10 MPa, the separator 50 can effectively buffer the electrode plate previously subjected to volume swelling during the charge-discharge process of the battery cell 20.

Specifically, in the embodiments of the present application, when the compressive strength of the separator 50 is measured, testing may be performed using a universal testing machine (for example, MDTC-EQ-M12-01). The specific steps are as follows: first, select multiple samples of the separator 50 under test, with the thickness of the selected samples under test controlled within a certain error range, and the thickness of the selected samples under test being greater than or equal to 1 mm; second, set an initial pressure value and conduct a compression test on the samples under test under this constant pressure to obtain the initial compressed thickness, where exemplarily, the initial pressure value may be set to 0.05 MPa; and third, continue to apply pressure to the multiple samples under test, increasing the pressure at a certain rate until the thickness of the samples under test no longer changes, obtain the pressure and stress data output by the universal testing machine, and analyze them to determine the compressive strength range of the samples under test.

Exemplarily, the compressive strength of the separator 50 in the embodiments of the present application may be 0.05 MPa, 0.1 MPa, 0.2 MPa, 0.3 MPa, 0.4 MPa, 0.5 MPa, 0.6 MPa, 0.7 MPa, 0.8 MPa, 0.9 MPa, 1 MPa, 2 MPa, 3 MPa, 4 MPa, 5 MPa, 6 MPa, 7 MPa, 8 MPa, 9 MPa, 10 MPa, or a value within a range defined by any two of these values.

In some implementations, exemplarily, the compressive strength of the separator 50 in the embodiments of the present application may also be [0.05 MPa, 3 MPa].

In some implementations, the negative electrode plate 60 includes a negative electrode current collector 61 and a negative electrode functional coating 62 disposed on a surface of the negative electrode current collector 61, the negative electrode functional coating 62 being disposed on one side surface or two side surfaces of the negative electrode current collector 61. Exemplarily, as shown in FIG. 5 and FIG. 6, the negative electrode functional coating 62 in the negative electrode plate 60 may be disposed on two side surfaces of the negative electrode current collector 61.

In embodiments of the present application, by providing a negative electrode functional coating 62 on one side surface or two side surfaces of the negative electrode current collector 61 of the negative electrode plate 60, the electrolyte retention capacity of the negative electrode plate 60 can be enhanced, enabling timely replenishment of electrolyte in cases of insufficient electrolyte or electrolyte depletion in the battery cell 20, effectively reducing usage performance degradation of the battery cell 20, and prolonging the cycle life of the battery cell 20.

In some implementations, the material of the negative electrode functional coating 62 is a porous carbon material, and preferably, the porous carbon material includes at least one of the following: carbon nanotubes, Super-P, KS-6, mesocarbon microbeads, hard carbon, and graphite. Thus, in embodiments of the present application, by arranging the material of the negative electrode functional coating 62 of the negative electrode plate 60 in the battery cell 20 to be a porous carbon material, the porous carbon material being possibly arranged as, for example, at least one of the following: carbon nanotubes, Super-P, KS-6, mesocarbon microbeads, hard carbon, and graphite, the electrolyte adsorption capacity of the negative electrode plate 60 can be enhanced, thereby improving the electrolyte retention capacity of the negative electrode functional coating 62, reducing the risk of electrolyte drying or disconnection, and prolonging the cycle life of the battery cell 20.

In embodiments of the present application, the thickness *H*₅ of the negative electrode current collector 61 in the negative electrode plate 60 should not be set too large or too small, and the thickness *H*₅ of the negative electrode current collector 61 may be set according to actual needs.

It should be understood that in the embodiments of the present application, during the initial charge-discharge process of the battery cell 20, the electrode material reacts with the electrolyte at the solid-liquid interface, forming a passivation layer covering the surface of the electrode material, and the passivation layer may also be referred to as an interface layer. As the passivation layer on the surface of the negative electrode material increases, the electrode impedance increases, affecting the charge-discharge efficiency of the negative electrode plate 60 and reducing the energy density of the battery cell 20. Therefore, the thickness *H*₂ of the negative electrode plate 60 should be set within an appropriate range. The following provides a detailed description of the value ranges for the thickness *H*₅ of the negative electrode current collector 61 and the thickness *H*₆ of the negative electrode functional coating 62 in the negative electrode plate 60.

In some implementations, the thickness *H*₅ of the negative electrode current collector 61 is [3 µm, 250 µm]. Thus, in embodiments of the present application, when the thickness *H*₅ of the negative electrode current collector 61 is set to less than 3 µm, the thickness *H*₅ of the negative electrode current collector 61 is relatively small, prone to localized short-circuit fusing, and the strength of the negative electrode current collector 61 decreases, affecting the usage performance of the battery 10. When the thickness *H*₅ of the negative electrode current collector 61 is set to greater than 250 µm, the thickness *H*₅ of the negative electrode current collector 61 is relatively large, increasing the processing costs of the battery 10, and due to spatial constraints within the battery cell 20, the thickness *H*₅ of the negative electrode current collector 61 has an upper limit. By setting the thickness *H*₅ of the negative electrode current collector 61 to 3 µm to 250 µm, the internal space of the battery cell 20 and the electrolyte retention performance of the negative electrode plate 60 can be balanced, improving the usage performance of the battery cell 20.

Exemplarily, the thickness *H*₅ of the negative electrode current collector 61 in the negative electrode plate 60 in the embodiments of the present application may be set to 3 µm, 4 µm, 5 µm, 6 µm, 7 µm, 8 µm, 9 µm, 10 µm, 15 µm, 20 µm, 25 µm, 30 µm, 50 µm, 70 µm, 90 µm, 110 µm, 130 µm, 150 µm, 170 µm, 190 µm, 210 µm, 230 µm, 250 µm, or a value within a range defined by any two of these values.

In some implementations, exemplarily, the thickness *H*₅ of the negative electrode current collector 61 has a value range of [4 µm, 30 µm].

In some implementations, the thickness *H*₆ of the negative electrode functional coating 62 is [0.2 µm, 50 µm]. Thus, in embodiments of the present application, when the thickness *H*₆ of the negative electrode functional coating 62 is set to less than 0.2 µm, the thickness *H*₆ of the negative electrode functional coating 62 is set relatively small, resulting in relatively poor electrolyte retention capacity of the negative electrode plate 60, and making it difficult to replenish electrolyte in the battery cell 20 in cases of excessively insufficient electrolyte or electrolyte depletion in the battery 10, thus affecting the cycle life of the battery cell 20. When the thickness *H*₆ of the negative electrode functional coating 62 is set to greater than 50 µm, the thickness *H*₆ of the negative electrode functional coating 62 is set relatively large, increasing the ion transport path within the battery cell 20, thereby increasing the liquid-phase impedance of the battery cell 20, affecting the specific capacity performance of the battery cell 20, and reducing the energy density of the battery cell 20. Additionally, due to spatial constraints within the battery cell 20, the thickness *H*₆ of the negative electrode functional coating 62 has an upper limit. By setting the thickness *H*₆ of the negative electrode functional coating 62 to 0.2 µm to 50 µm, the internal space of the battery cell 20 and the electrolyte retention capacity of the negative electrode plate 60 can be balanced, effectively reducing performance degradation of the battery cell 20 and prolonging the cycle life of the battery cell 20.

Exemplarily, the thickness *H*₆ of the negative electrode functional coating 62 in the negative electrode plate 60 in the embodiments of the present application may be set to 0.2 µm, 0.3 µm, 0.4 µm, 0.5 µm, 0.6 µm, 0.7 µm, 0.8 µm, 0.9 µm, 1 µm, 2 µm, 3 µm, 4 µm, 5 µm, 6 µm, 7 µm, 9 µm, 10 µm, 15 µm, 20 µm, 25 µm, 30 µm, 35 µm, 40 µm, 45 µm, 50 µm, 70 µm, 90 µm, 110 µm, 130 µm, 150 µm, 170 µm, 190 µm, 210 µm, 230 µm, 250 µm, or a value within a range defined by any two of these values.

In some implementations, the thickness *H*₆ of the negative electrode functional coating 62 is [0.5 µm, 30 µm], and preferably, the thickness *H*₆ of the negative electrode functional coating 62 is [2 µm, 20 µm]. Thus, in embodiments of the present application, by better balancing the internal space of the battery cell 20 and the electrolyte retention capacity of the negative electrode plate 60, the performance degradation of the battery cell 20 is effectively reduced, prolonging the cycle life of the battery cell 20.

The following describes examples of the present application. The examples described below are exemplary and are used only to explain the present application and should not be construed as limiting the present application. Specific techniques or conditions are not specified in the examples of the present application, they are carried out according to techniques or conditions described in the literature in the field or according to product specifications. Reagents or instruments used without specifying the manufacturer are conventional products commercially available.

The electrolyte retention performance and electrical performance of the battery cell 20 provided by examples of the present application were tested and the test results obtained are shown in Table 1 below.

**Table 1: Test results of electrolyte retention performance and electrical performance of battery cell 20 with different H₁/H₂ values**

| Name | H₁ (µm) | H₂ (µm) | H₁/H₂ | Electrolyte retention performance (mg/cm²) | Electrical performance (%) |
|---|---|---|---|---|---|
| Comparative Example 1 | 900 | 3.4 | 264.71 | 18.50 | 78 |
| Example 1 | 820 | 3.4 | 241.18 | 17.90 | 80 |
| Example 2 | 800 | 3.4 | 235.29 | 17.40 | 81 |
| Example 3 | 750 | 3.4 | 220.59 | 17.00 | 85 |
| Example 4 | 600 | 5 | 120.00 | 14.10 | 89 |
| Example 5 | 600 | 8 | 75.00 | 12.00 | 90 |
| Example 6 | 900 | 24 | 37.50 | 11.50 | 90 |
| Example 7 | 750 | 28 | 26.79 | 10.30 | 91 |
| Example 8 | 600 | 28 | 21.43 | 8.60 | 92 |
| Example 9 | 70 | 7 | 10.00 | 3.00 | 94 |
| Example 10 | 60 | 10 | 6.00 | 2.70 | 94 |
| Example 11 | 120 | 28 | 4.29 | 2.50 | 93 |
| Example 12 | 100 | 28 | 3.57 | 2.20 | 93 |
| Example 13 | 80 | 28 | 2.86 | 2.00 | 93 |
| Example 14 | 60 | 28 | 2.14 | 1.70 | 93 |
| Example 15 | 40 | 28 | 1.43 | 1.51 | 93 |
| Example 16 | 32 | 24 | 1.33 | 1.30 | 93 |
| Example 17 | 25 | 20 | 1.25 | 1.20 | 93 |
| Example 18 | 24 | 20 | 1.20 | 0.90 | 93 |
| Example 19 | 22 | 19 | 1.16 | 0.88 | 92 |
| Example 20 | 40 | 45 | 0.89 | 0.71 | 89 |
| Example 21 | 40 | 90 | 0.44 | 0.70 | 89 |
| Example 22 | 32 | 90 | 0.36 | 0.60 | 89 |
| Example 23 | 28 | 90 | 0.31 | 0.58 | 87 |
| Example 24 | 14 | 90 | 0.15 | 0.41 | 85 |
| Example 25 | 9 | 90 | 0.10 | 0.37 | 83 |
| Comparative Example 2 | 6 | 90 | 0.07 | 0.08 | 81 |
| Comparative Example 3 | 3.6 | 90 | 0.04 | 0.035 | 79 |
| Comparative Example 4 | 3.2 | 160 | 0.02 | 0.032 | 75 |
| Comparative Example 5 | 3 | 300 | 0.01 | 0.03 | 72 |

As shown in Table 1 above, *H*₁ in Table 1 represents the thickness of the separator 50 in the examples of the present application. Exemplarily, the separator 50 may include a separator body 51 and a functional separator coating 52 disposed on two side surfaces of the separator body 51. *H*₂ in Table 1 represents the thickness of the negative electrode plate 60 in the examples of the present application. Exemplarily, the negative electrode plate 60 includes a negative electrode current collector 61 and a negative electrode functional coating 62 disposed on two side surfaces of the negative electrode current collector 61. The electrolyte retention performance in Table 1 represents the electrolyte retention capacity of the separator 50 in the examples of the present application. The electrical performance in Table 1 represents the initial efficiency of the battery cell 20, where the initial efficiency refers to the ratio of the initial discharge capacity to the initial charge capacity of the battery cell 20. It should be understood that in the examples of the present application, the initial efficiency may also be referred to as the first efficiency.

It should be understood that in the examples of the present application, the electrolyte retention performance of the battery cell 20 can be characterized by the electrolyte retention performance of the separator 50. Specifically, when the electrolyte retention performance of the separator 50 was tested, first, a fully charged battery cell 20 was disassembled to obtain different numbers of separators 50 as test samples, the separators 50 being circular sheets with a diameter of 10 mm to 20 mm, and placed in different centrifuge tubes. Exemplarily, the capacity of the centrifuge tubes might be 50 mL, with the test samples occupying two-thirds of the total volume of the centrifuge tube, and the centrifuge tubes were sealed. Subsequently, the centrifuge tubes were placed in a centrifuge and ran at 300 rpm for 30 min. After removal of the test sample, the remaining electrolyte in the centrifuge tube was weighed, and the mass of the remaining electrolyte was divided by the surface area of the corresponding test sample, that is, the separator 50, to obtain the electrolyte retention per unit area of the separator 50, which characterized the electrolyte retention capacity of the battery cell 20.

It should also be understood that in the examples of the present application, when the electrical performance of the battery cell 20 was tested, specifically, for testing the initial charge capacity, multiple battery cells 20 might be obtained as test samples (for example, five samples), and charged at a constant current of 0.1C and a constant voltage to the nominal upper limit voltage. For example, the nominal upper limit voltage might be 3.65 V, and rested for 10 min. Then, the initial charge capacities of the five test samples were measured, the highest and lowest values were removed, and the average of the remaining three initial charge capacities was calculated as the initial charge capacity of the battery cell 20. For testing the initial discharge capacity, similarly, multiple battery cells 20 might be obtained as test samples (for example, five samples), and discharged at a constant current of 0.1C and a constant voltage to the nominal lower limit voltage. For example, the nominal lower limit voltage may be 2.5 V, and rested for 10 min. Then, the initial discharge capacities of the five test samples were measured, the highest and lowest values were removed, and the average of the remaining three initial discharge capacities was calculated as the initial discharge capacity of the battery cell 20. Subsequently, the ratio of the average initial charge capacity to the average initial discharge capacity was calculated as the initial efficiency of the battery cell 20, corresponding to the electrical performance in Table 1.

In some implementations, to meet the normal usage requirements of the battery cell 20, that is, to satisfy the electrolyte retention performance of the battery cell 20, the value of the electrolyte retention performance of the separator 50 in the battery cell 20 is typically set to be greater than or equal to 0.08. When the value of the electrolyte retention performance of the separator 50 is greater than or equal to 0.08, the battery cell 20 is considered to have good electrolyte retention performance, allowing the electrode plate to be well infiltrated, and the ion transport capability within the battery cell 20 is good, facilitating electrical performance. As shown in Table 1, when *H*₁/*H*₂ is greater than or equal to 0.07, the value of the electrolyte retention performance of the separator 50 is greater than or equal to 0.08, meaning that the battery cell 20 has good electrolyte retention performance.

As shown in Table 1, as the value of *H*₁/*H*₂ increases, the corresponding electrolyte retention performance value also increases. Exemplarily, as the thickness *H*₁ of the separator 50 increases, the value of *H*₁/*H*₂ also increases, and correspondingly, the electrolyte retention performance of the battery cell 20 increases. However, an excessively large thickness *H*₁ of the separator 50 increases the ion transport path within the battery cell 20, thereby increasing the liquid-phase impedance of the battery cell 20, affecting the specific capacity performance of the battery cell 20, and reducing the energy density of the battery cell 20, which in turn degrades the electrical performance of the battery cell 20, making it difficult to meet the basic usage demands of users. In some implementations, to meet the basic electrical performance requirements of the battery cell 20, the initial efficiency of the battery cell 20, that is, the value of the electrical performance in Table 1, is typically set to be greater than or equal to 80%. As shown in Table 1, when 0.07 ≤ *H*₁/*H*₂ ≤ 241.18, the initial efficiency of the battery cell 20 is greater than or equal to 80%, meaning that in this case, the battery cell 20 can meet the basic usage demands of users.

In some other implementations, to meet the current practical demands for the electrical performance of the battery cell 20 in the field, the initial efficiency of the battery cell 20 may be set to be greater than or equal to 85%, or the initial efficiency of the battery cell 20 may be set to be greater than or equal to 90%. For example, as shown in Table 1, when 0.15 ≤ *H*₁/*H*₂ ≤ 220.59, the initial efficiency of the battery cell 20 is greater than or equal to 85%, meaning that in this case, the battery cell 20 has good electrolyte retention performance and superior electrical performance. As another example, as shown in Table 1, when 1.16 ≤ *H*₁/*H*₂ ≤ 75, the initial efficiency of the battery cell 20 is greater than or equal to 90%, meaning that in this case, the battery cell 20 has good electrolyte retention performance and superior electrical performance.

In some other implementations, to further meet the practical demands for the electrical performance of the battery cell 20 in the field, the initial efficiency of the battery cell 20 may be set to be greater than or equal to 92%, or the initial efficiency of the battery cell 20 may be set to be greater than or equal to 93%. For example, as shown in Table 1, when 1.16 ≤ *H*₁/*H*₂ ≤ 21.43, the initial efficiency of the battery cell 20 is greater than or equal to 92%, meaning that in this case, the battery cell 20 has good electrolyte retention performance and superior electrical performance. As another example, as shown in Table 1, when 1.20 ≤ *H*₁/*H*₂ ≤ 10, the initial efficiency of the battery cell 20 is greater than or equal to 93%, meaning that in this case, the battery cell 20 has good electrolyte retention performance and optimal electrical performance.

Although the present application has been described with reference to the above embodiments, various improvements may be made thereto, and components therein may be replaced with equivalents without departing from the scope of the present application. In particular, as long as there is no structural conflict, the various technical features mentioned in the embodiments may be combined in any manner. The present application is not limited to the specific embodiments disclosed herein but includes all technical solutions falling within the scope of the claims.

## Claims

1. A battery cell, **characterized by** comprising:
an electrode assembly, the electrode assembly comprising a negative electrode plate, a positive electrode plate, and a separator, wherein the separator is configured to isolate the negative electrode plate and the positive electrode plate;
wherein a ratio of a thickness *H*₁ of the separator to a thickness *H*₂ of the negative electrode plate is greater than or equal to 0.07.

2. The battery cell according to claim 1, **characterized in that** the thickness *H*₁ of the separator and the thickness *H*₂ of the negative electrode plate satisfy: 0.07 ≤ *H*₁/*H*₂ ≤ 241.18, and preferably, the thickness *H*₁ of the separator and the thickness *H*₂ of the negative electrode plate satisfy: 0.15 ≤ *H*₁/*H*₂ ≤ 220.59.

3. The battery cell according to claim 1 or 2, **characterized in that** the thickness *H*₁ of the separator and the thickness *H*₂ of the negative electrode plate satisfy: 1.16 ≤ *H*₁/*H*₂ ≤ 75, and preferably, the thickness *H*₁ of the separator and the thickness *H*₂ of the negative electrode plate satisfy: 1.16 ≤ *H*₁/*H*₂ ≤ 21.43.

4. The battery cell according to any one of claims 1 to 3, **characterized in that** the thickness *H*₁ of the separator and the thickness *H*₂ of the negative electrode plate satisfy: 1.20 ≤ *H*₁/*H*₂ ≤ 10.

5. The battery cell according to any one of claims 1 to 4, **characterized in that** the separator comprises a separator body and a functional separator coating disposed on a surface of the separator body, the functional separator coating being disposed on one side surface or two side surfaces of the separator body.

6. The battery cell according to claim 5, **characterized in that** a material of the functional separator coating comprises at least one of the following: polyvinylidene fluoride copolymer, sodium carboxymethyl cellulose, polystyrene-butadiene copolymer, hydrogenated styrene-butadiene block copolymer, hydrogenated styrene-isoprene block copolymer, ethylene-butene copolymer, polypropylene-octene thermoplastic elastomer, ethylene-octene thermoplastic elastomer, and propylene-ethylene copolymer.

7. The battery cell according to claim 5 or 6, **characterized in that** a thickness of the separator body is 3 µm to 250 µm.

8. The battery cell according to any one of claims 5 to 7, **characterized in that** the thickness of the separator body is 5 µm to 50 µm.

9. The battery cell according to any one of claims 5 to 8, **characterized in that** a thickness of the functional separator coating is 0.1 µm to 250 µm.

10. The battery cell according to any one of claims 5 to 9, **characterized in that** the thickness of the functional separator coating is 0.5 µm to 50 µm, and preferably, the thickness of the functional separator coating is 2 µm to 20 µm.

11. The battery cell according to any one of claims 5 to 10, **characterized in that** the functional separator coating is a hollow resilient structure.

12. The battery cell according to claim 11, **characterized in that** the hollow resilient structure comprises a non-closed pore structure.

13. The battery cell according to claim 12, **characterized in that** at least one opening of the pore structure faces the negative electrode plate.

14. The battery cell according to claim 12 or 13, **characterized in that** the hollow resilient structure comprises multiple non-closed hollow resilient microspheres arranged along the surface of the separator body.

15. The battery cell according to claim 13 or 14, **characterized in that** a specific surface area of the pore structure is 0.5 m²/g to 10 m²/g.

16. The battery cell according to any one of claims 1 to 15, **characterized in that** a compression percentage of the separator is 8% to 95%.

17. The battery cell according to any one of claims 1 to 16, **characterized in that** the compression percentage of the separator is 20% to 80%.

18. The battery cell according to any one of claims 1 to 17, **characterized in that** a compressive strength range of the separator is 0.05 MPa to 10 MPa.

19. The battery cell according to any one of claims 1 to 18, **characterized in that** the compressive strength range of the separator is 0.05 MPa to 3 MPa.

20. The battery cell according to any one of claims 1 to 19, **characterized in that** the battery cell is an anodeless sodium secondary battery.

21. The battery cell according to any one of claims 1 to 20, **characterized in that** the negative electrode plate comprises a negative electrode current collector and a negative electrode functional coating disposed on a surface of the negative electrode current collector, the negative electrode functional coating being disposed on one side surface or two side surfaces of the negative electrode current collector.

22. The battery cell according to claim 21, **characterized in that** a material of the negative electrode functional coating is a porous carbon material; and
preferably, the porous carbon material comprises at least one of the following: carbon nanotubes, Super-P, KS-6, mesocarbon microbeads, hard carbon, and graphite.

23. The battery cell according to claim 21 or 22, **characterized in that** a thickness of the negative electrode current collector is 3 µm to 50 µm.

24. The battery cell according to any one of claims 21 to 23, **characterized in that** the thickness of the negative electrode current collector is 4 µm to 30 µm.

25. The battery cell according to any one of claims 21 to 24, **characterized in that** a thickness of the negative electrode functional coating is 0.2 µm to 50 µm.

26. The battery cell according to any one of claims 21 to 25, **characterized in that** the thickness of the negative electrode functional coating is 0.5 µm to 30 µm, and preferably, the thickness of the negative electrode functional coating is 2 µm to 20 µm.

27. A battery, **characterized by** comprising:
the battery cell according to any one of claims 1 to 26.

28. An electric apparatus, **characterized by** comprising:
the battery according to claim 27, wherein the battery is configured to provide electrical energy to the electric apparatus.
